(19) Europäisches Patentamt
European Patent Office
Office européen des brevets

(11) Publication number: **0 432 971 A1**

# (12) EUROPEAN PATENT APPLICATION

(21) Application number: **90313307.2**

(51) Int. Cl.$^5$: **H01L 41/04**

(22) Date of filing: **07.12.90**

(30) Priority: **11.12.89 JP 321868/89**

(43) Date of publication of application: **19.06.91 Bulletin 91/25**

(84) Designated Contracting States: **CH DE GB LI**

(71) Applicant: **SEIKO INSTRUMENTS INC.**
**31-1, Kameido 6-chome Koto-ku**
**Tokyo 136 (JP)**

(72) Inventor: **Noguchi, Nasahiro, c/o Seiko Instruments Inc.**
**31-1 Kameido 6-chome**
**Koto-ku, Tokyo (JP)**

(74) Representative: **Caro, William Egerton et al**
**J. MILLER & CO. Lincoln House 296-302 High Holborn**
**London WC1V 7JH (GB)**

## (54) Ultra-sonic motor driving circuit.

(57) The present invention provides an ultra-sonic motor driving circuit having a control circuit (1) for supplying a drive enable signal and a battery voltage detecting circuit (3) for detecting a battery voltage. A drive duty generating circuit (2) is arranged to output a drive request signal intermittently in response to the drive enable signal and an output from the battery voltage detecting circuit. Driving means (4, 5, 6, 7) are responsive to the drive request signal for intermittently driving an ultra-sonic motor.

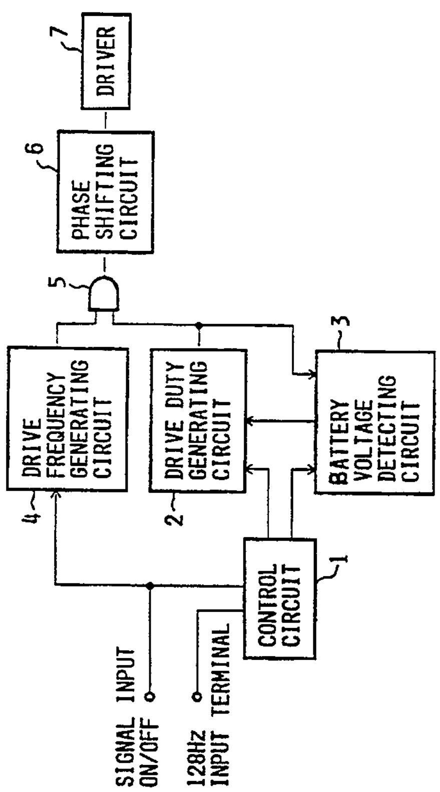

FIG. 1

EP 0 432 971 A1

# ULTRA-SONIC MOTOR DRIVING CIRCUIT

The present invention relates to an ultra-sonic motor driving circuit, which employs a piezo-electric element to generate a driving force for the ultra-sonic motor.

A conventional, ultra-sonic motor is driven continuously by supplying a large current of several tens of milliamperes continuously from a battery.

However, in the driving circuit for this motor, the battery capacity cannot be utilised effectively.

In general, when a large current is to be derived from a battery, the magnitude of the current available for use is less than the capacity of the battery. This may be explained by referring to figure 2, which shows load characteristics for a battery. In this figure, curves A, B and C represent load characteristics for three different load resistances (small, medium and large), respectively. When, for example, the final voltage is taken as 2.0 V, the current utilisation of each load resistor is about 5418 mAh for the curve A, about 5486 mAh for the curve B and about 5645 mAh for the curve C. This shows that the smaller the current taken out, the more effectively the battery capacity can be utilised.

Therefore, the conventional driving circuit, in which a large amount of current is supplied continuously, has the drawback of not being able to make full use of the battery capacity.

An object of the present invention is to provide an ultra-sonic motor driving circuit, which enables utilisation of the battery capacity to be improved.

An ultra-sonic motor driving circuit according to this invention comprises a control circuit for supplying a drive enable signal, a battery voltage detecting circuit for detecting a battery voltage, a drive duty generating circuit arranged to output a drive request signal intermittently in response to the drive enable signal and an output from the battery voltage detecting circuit, and means for driving an ultra-sonic motor intermittently in response to the drive request signal.

Advantageously, the battery voltage is detected by the battery voltage detecting circuit and the drive duty generating circuit determines a pause interval for the drive request signal based on a detected voltage, in order to supply the drive request signal intermittently.

In a preferred embodiment, the driving means comprise drive signal output means for producing a drive signal intermittently on receiving the drive request signal. The drive signal thus generated is supplied to a phase shifting circuit, where it is phase shifted by 90° and then output. A driver then supplies current to the ultra-sonic motor according to the output from the phase shifting circuit. The output signal of the driver, therefore, is in the form of bursts with pause intervals, the pause intervals being variable with a change in the battery voltage.

The invention is described further, by way of example, with reference to the accompanying drawings, in which :-

Figure 1 is a block diagram showing one embodiment of ultra-sonic motor driving circuit according to the present invention ;

Figure 2 is a graph showing load characteristics of a battery ;

Figure 3 is a circuit diagram of a control circuit and a drive duty generating circuit of the ultra-sonic motor driving circuit of Figure 1 ;

Figure 4 is a circuit diagram of a battery voltage detecting circuit of the ultra-sonic motor driving circuit of figure 1 ; and

Figure 5 is a wave form diagram.

Figure 1 is a block diagram of an embodiment of this invention comprising a control circuit 1, which receives an ON/OFF signal and a frequency signal from outside and which controls the ultra-sonic motor operation. A drive duty generating circuit 2 generates a drive request signal in response to a drive enable signal from the control circuit 1 and according to battery voltage information from a battery voltage detecting circuit 3, and sends the drive request signal to an AND gate 5 and the battery voltage detecting circuit 3. The battery voltage detecting circuit 3 measures the battery voltage at a high-to-low transition of the drive request signal output from the drive duty generating circuit 2 and sends information relating to the measured voltage to the drive duty generating circuit 2. The drive request signal output from the drive duty generating circuit 2 comprises a high level pulse of a constant duration, which is followed by a pause interval whose duration changes according to the voltage detection result from the battery voltage detecting circuit 3.

The drive request signal is produced repeatedly while the drive enable signal from the control circuit 1 is present. The AND gate 5 applies a drive frequency signal output from a drive frequency generating circuit 4 to a phase shifting circuit 6 while the drive request signal from the drive duty generating circuit 2 is high. The drive frequency signal output by the AND gate 5 is shifted by the phase shifting circuit 6 by 90°. A driver 7 supplies current to the ultra-sonic motor according to the frequency signal from the phase shifting circuit 6 to drive the motor intermittently.

The battery voltage detecting circuit 3 measures the battery voltage at the trailing edge of the drive request signal of the drive duty generating circuit 2, employing the frequency signal from the control circuit 1, and sends the measured voltage information to the drive duty generating circuit 2. The drive duty generating circuit 2 thereby produces the drive request signal, which consists of the high level pulse of constant duration and which is followed by the pause interval of variable duration that changes depending on the battery voltage information received. The pause interval has a short duration when the battery capacity is sufficient and a long duration when the battery capacity is low. This variable signal allows effective use of the battery capacity.

While in this embodiment, the duty ratio of the drive request signal produced by the drive duty generating circuit 2 is made variable according to the battery voltage, it is also possible for the duty ratio to be constant.

A description of the control circuit 1 of the drive duty generating circuit 2 of this embodiment will be given with reference to Figures 3 and 5, Figure 3 being a detailed circuit diagram of the control circuit 1 and the drive duty generating circuit 2 and Figure 5 being a time chart for signals arising during operation of the circuitry of Figure 3.

The control circuit 1 receives at its inputs the ON/OFF signal a and the frequency signal from outside, having a frequency of 128 Hz, to control the operation of the ultra-sonic motor.

The external 128 Hz frequency signal is divided by a first T flip flop 11 to one half (64 Hz) and is further divided by a second T flip flop 12 to one half again (32 Hz), and is then supplied to a first D flip flop 13. The first D flip flop 13 receives the external ON/OFF signal a and when this is on, that is when the signal a goes high, the first D flip flop 13 holds its Q output high. The signal from the Q output of the D flip flop 13 is supplied to a differentiating circuit 14, 15, which also receives the 128 Hz frequency signal and which produces, at the rising edge of the signal from the Q output of the first D flip flop 13, a one shot pulse signal e of a duration corresponding to one cycle of the 128 Hz frequency signal.

The drive duty generating circuit 2 produces the drive request signal b according to the drive enable signal d from the control circuit 1 and to the battery voltage information from the battery voltage detecting circuit 3. One cycle of the drive request signal b output from the drive duty generating circuit 2 consists of the constant duration high level pulse and the variable duration pause interval, which follows the high level pulse and whose duration changes according to the output of the battery voltage detecting circuit 3. The drive request signal b is produced repeatedly while the drive enable signal d from the control circuit 1 is present.

The 32 Hz frequency signal from the control circuit 1 is applied to a counter 21 having a count cycle of twenty four and to a hexadecimal pre-settable counter 23. The counter 21 sets the output duration of the drive duty generating circuit 2 and the counter 23 sets the duration of the pause interval of the circuit 2. When the $\bar{Q}$ output signal d from the first D flip flop 13 is high, a first R-S latch 22 and a second R-S latch 24 are re-set. The output of the counter 21 is connected to the input of the first R-S latch 22 and the re-set input of the second R-S latch 24. The output of the counter 23 is connected to the re-set input of the first R-S latch 22 and to the input of the second R-S latch 24.

The output signal e from the differentiating circuit 14, 15 of the control circuit 1 is fed to the second R-S latch 24, which is arranged, when the signal d at its re-set terminal applied from the control circuit 1 becomes low, to produce a signal b that goes high at the rising edge of the one shot pulse signal e. This initiates the output period for driving the ultrasonic motor.

The output signal b of the second R-S latch 24 is inverted to become $\bar{b}$ by an inverter 45, which is connected to the re-set terminal of the twenty four count counter 21. The counter 21 starts counting at the falling edge of the signal $\bar{b}$. Upon finishing a counting cycle, the counter 21 produces a one shot signal f, which is supplied to the first R-S latch 22 and the second R-S latch 24. The output signal b of the second R-S latch 24 undergoes high-to-low transition at the rising edge of the output signal f of the counter 21. At the same time, the counter 21 is re-set by the signal $\bar{b}$. This terminates the output period, stopping the drive signal to the ultra-sonic motor and initiating the pause interval. An output signal 1of the first R-S latch 22 goes high at the rising edge of the output signal f of the counter 21.

A D flip flop 25 receives the signal b from the second R-S latch 24 and also the 64 Hz frequency signal from the control circuit 1, which is inverted by an inverter 34, to produce a signal g that lags the input signal b by half a cycle of the 64 Hz frequency signal. This output signal g is supplied to a shaping circuit 26, 27 together with the 128 Hz frequency signal from the control circuit 1, and the shaping circuit 26, 27 outputs a one shot pulse h at the falling edge of the signal g.

The one shot pulse h from the shaping circuit 26, 27 is provided through a series of gates 29, 31, 33 to re-set terminals R of the hexadecimal pre-settable counter 23. The pulse h is also inverted by an inverter 28 and fed through gates 30, 32 to set terminals S of the hexadecimal pre-settable counter 23, which is set according to battery voltage information at the rising edge of the signal h.

In addition, the output signal l from the first R-S latch 22 is inverted by an inverter 46 and is fed through gates 29, 31 and 33 to the re-set terminals R of the hexadecimal pre-settable counter 23.

Outputs S1, S2 of the battery voltage detecting circuit 3 are also applied through the gates 31, 32, 29 and 30 to the hexadecimal pre-settable counter 23. When the battery voltage is sufficiently high, for example, the outputs S1, S2 of the battery voltage detecting circuit 3 are both low. When the battery voltage is between 2.4 V and 2.8 V, the output S1 is high and the output S2 is low. Where the battery voltage is below 2.4 V, the outputs S1, S2 are both high.

Now, let us take as an example the case of the battery voltage being less than 2.4 V. The outputs S1, S2 of the battery voltage detecting circuit 3 are both high, as a result of which the hexadecimal pre-settable counter 23 becomes 0000 and counts the 32 Hz frequency signal from the control circuit 1 for the period of sixteen cycles (0.5 seconds), before producing a one shot pulse k at the falling edge of the 32 Hz frequency signal. At the rising edge of this one shot pulse k, the first R-S latch 22 is re-set and the second R-S latch 24 undergoes a low-to-high transition, terminating the pause interval in the driving of the ultra-sonic motor and starting the output period again. Hence the ultra-sonic motor is re-started.

By repeating the above operation, the ultra-sonic motor can be operated in such a way that the pause interval corresponds to the battery capacity.

Next, the battery voltage detecting circuit 3 will be described with reference to the detailed circuit diagram of Figure 4 and the time chart of Figure 5.

The battery voltage detecting circuit 3, using the 128 Hz frequency signal from the control circuit 1, detects the battery voltage at the falling edge of the drive request signal b output from the drive duty generating circuit 2 and sends the voltage information to the drive duty generating circuit 2.

A shaping circuit 35, 36 in the battery voltage detecting circuit 3 receives the signal b output from the drive duty generating circuit 2 and, using the 128 Hz frequency signal from the control circuit 1, produces at the falling edge of the signal b a one shot pulse i for battery voltage sampling. The output of the shaping circuit 35, 36 is connected to first and second voltage dividing circuits 37, 38, each of which divides the battery voltage by means of resistances, and also to a constant reference voltage source 40, which comprises a stable regulated voltage source that utilises the threshold voltage of a MOS transistor and has immunity to power supply variations. A first comparator 41 compares the voltage of the first voltage dividing circuit 37 with that of the reference voltage source 40 to detect the battery voltage of, for example,-2.8 V. The first comparator 41 produces a low output when the battery voltage is sufficiently high and a high output when it is below 2.8 V. Likewise, the second comparator 42 compares the voltage of the second voltage dividing circuit 38 with that of the reference voltage source 40 to detect the battery voltage of, say,-2.4 V. The output of the second comparator 42 becomes low when the battery voltage is high enough and goes high when it is below 2.4 V.

A NAND gate 39 receives the 128 Hz frequency signal from the control circuit 1 and the output signal i from the shaping circuit 35, 36 as inputs. The output of the NAND gate 39 is connected to the C inputs of two D flip flops 43, 44. The outputs of the first and second comparators 41, 42 are supplied to the D inputs of the D flip flops 43, 44. Using the output of the NAND gate 39, the D flip flops 43, 44 latch the output data from the first and second comparators 41, 42 respectively. The outputs S1, S2 of the D flip flops 43, 44 represent the battery voltage information output from the battery voltage detecting circuit 3 to the drive duty generating circuit 2.

The present invention as described above has the advantage of being able to improve utilisation of the battery capacity by intermittently driving the ultra-sonic motor. Furthermore, since the pause interval of the intermittent drive signal, which is used to drive the ultra-sonic motor, is made to change according to the battery voltage level, the utilisation can further be improved by comparison with an arrangement in which the pause interval is fixed.

The invention is particularly advantageous when the ultra-sonic motor is used as the driving source of a vibrating alarm, because when the battery voltage is high enough the above configuration allows continuous operation of the motor.

## Claims

1. An ultra-sonic motor driving circuit characterised by a control circuit (1) for supplying a drive enable signal, a battery voltage detecting circuit (3) for detecting a battery voltage, a drive duty generating circuit (2) arranged to output a drive request signal intermittently in response to the drive enable signal and an output from the battery voltage detecting circuit, and means (4 to 7) for driving an ultra-sonic motor intermittently in response to the drive request signal.

2. A driving circuit according to claim 1, characterised in that the drive duty generating circuit is arranged to generate a pause interval of variable duration in its output of the drive request signal.

3. A driving circuit according to claim 1 or 2 characterised in that the drive duty generating circuit is arranged to output the drive request signal with a constant duty ratio.

4. A driving circuit according to any of claims 1 to 3 characterised in that the battery voltage detecting circuit is operable in response to the drive request signal.

5. A driving circuit according to any of claims 1 to 4 characterised in that the driving means comprise drive signal output means (4, 5) for supplying a drive signal in response to the drive request signal, a phase shifting circuit (6) arranged to receive the drive signal, and a driver (7) operable by an output from the phase shifting circuit.

6. An ultra-sonic motor driving circuit characterised by a control circuit (1) which receives a frequency signal and an external ON/OFF signal to output a drive enable signal and a frequency signal ; a battery voltage detecting circuit (3) to detect a battery voltage ; a drive duty generating circuit (2) to output a drive request signal intermittently according to signals output from the control circuit and the battery voltage detecting circuit ; a drive signal output means (4,5) to receive the drive request signal and output a corresponding drive signal ; a phase shifting circuit (6) to which the drive signal is supplied ; and a driver (7) to which an output from the phase shifting circuit is supplied.

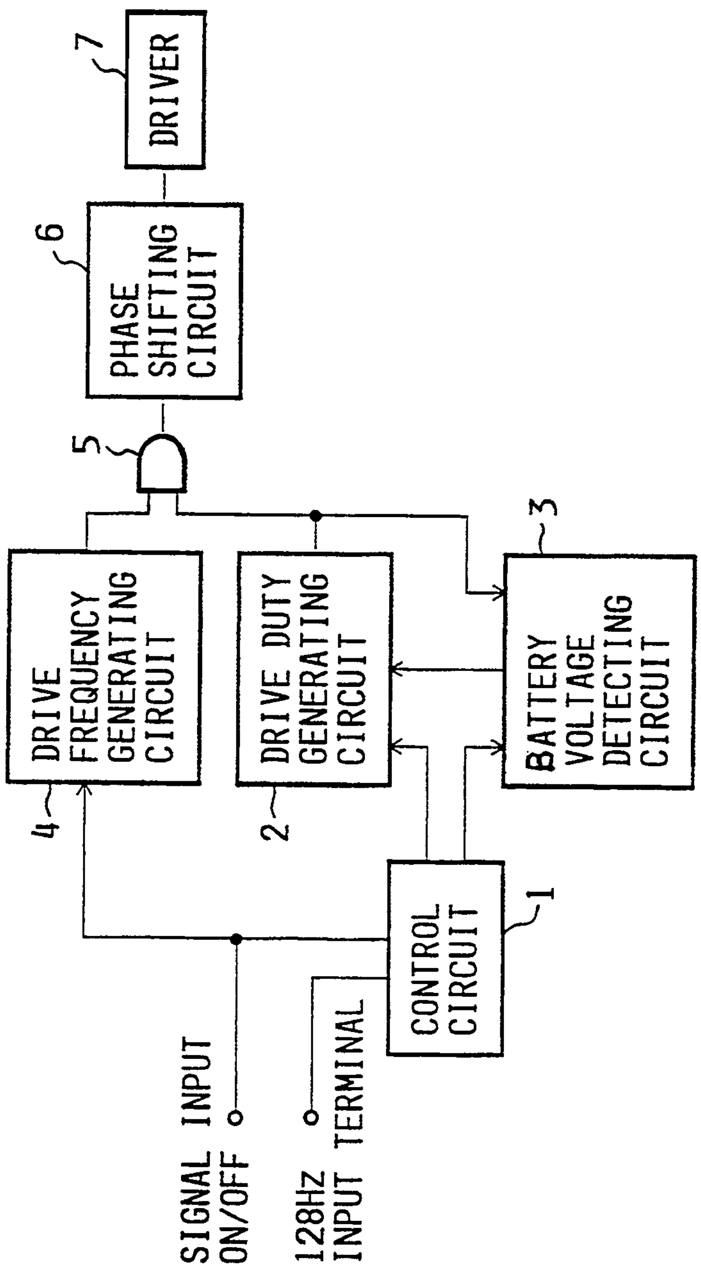
DRIVER
7
PHASE SHIFTING CIRCUIT
6
5
DRIVE FREQUENCY GENERATING CIRCUIT
4
DRIVE DUTY GENERATING CIRCUIT
2
BATTERY VOLTAGE DETECTING CIRCUIT
3
CONTROL CIRCUIT
1
SIGNAL INPUT ON/OFF
128Hz INPUT TERMINAL

FIG. 1

FIG. 2

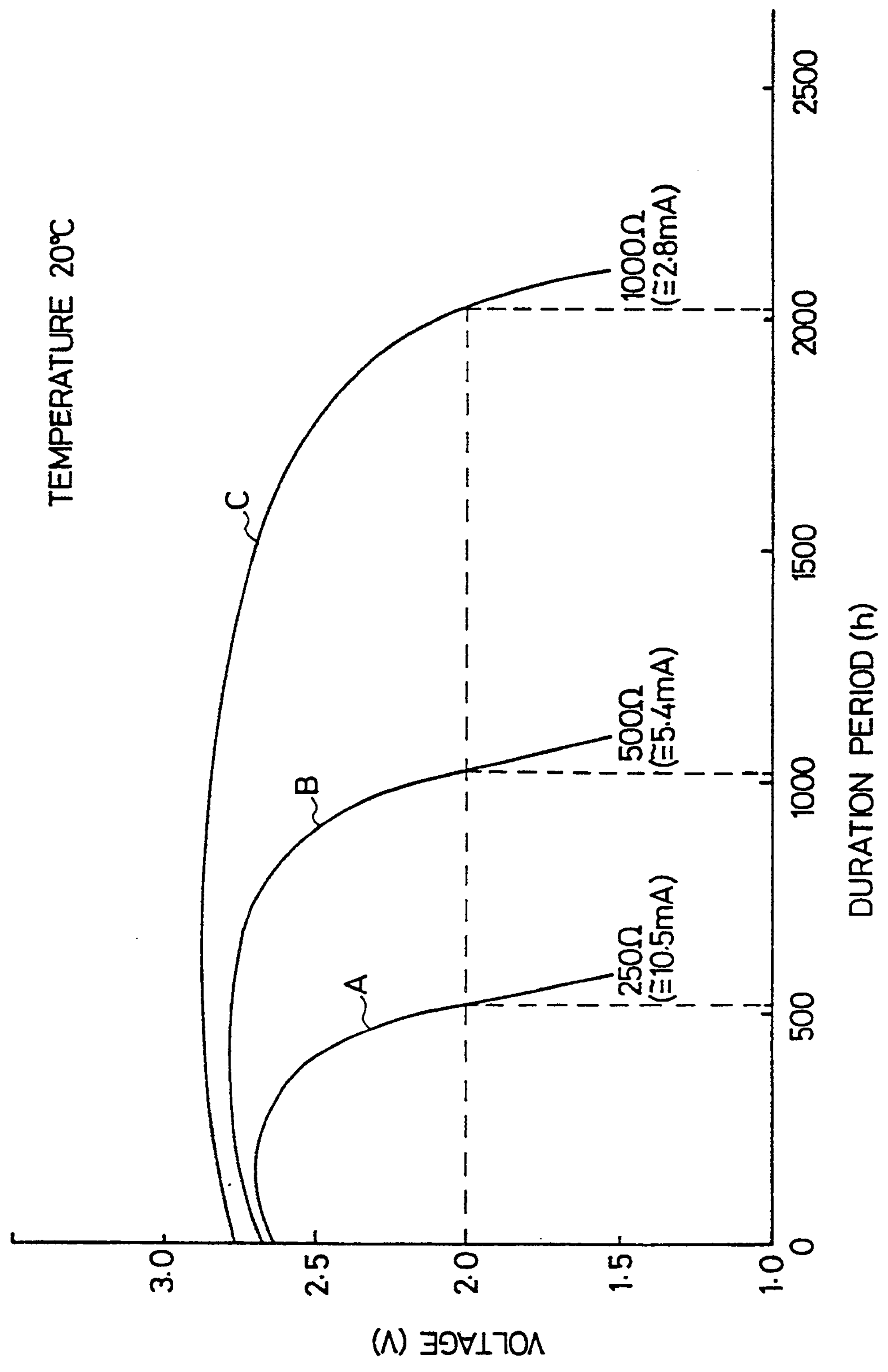
TEMPERATURE 20°C
VOLTAGE (V)
3.0
2.5
2.0
1.5
1.0
0
500
1000
1500
2000
2500
DURATION PERIOD (h)
A
B
C
250Ω
(≃10.5mA)
500Ω
(≃5.4mA)
1000Ω
(≃2.8mA)

FIG. 3

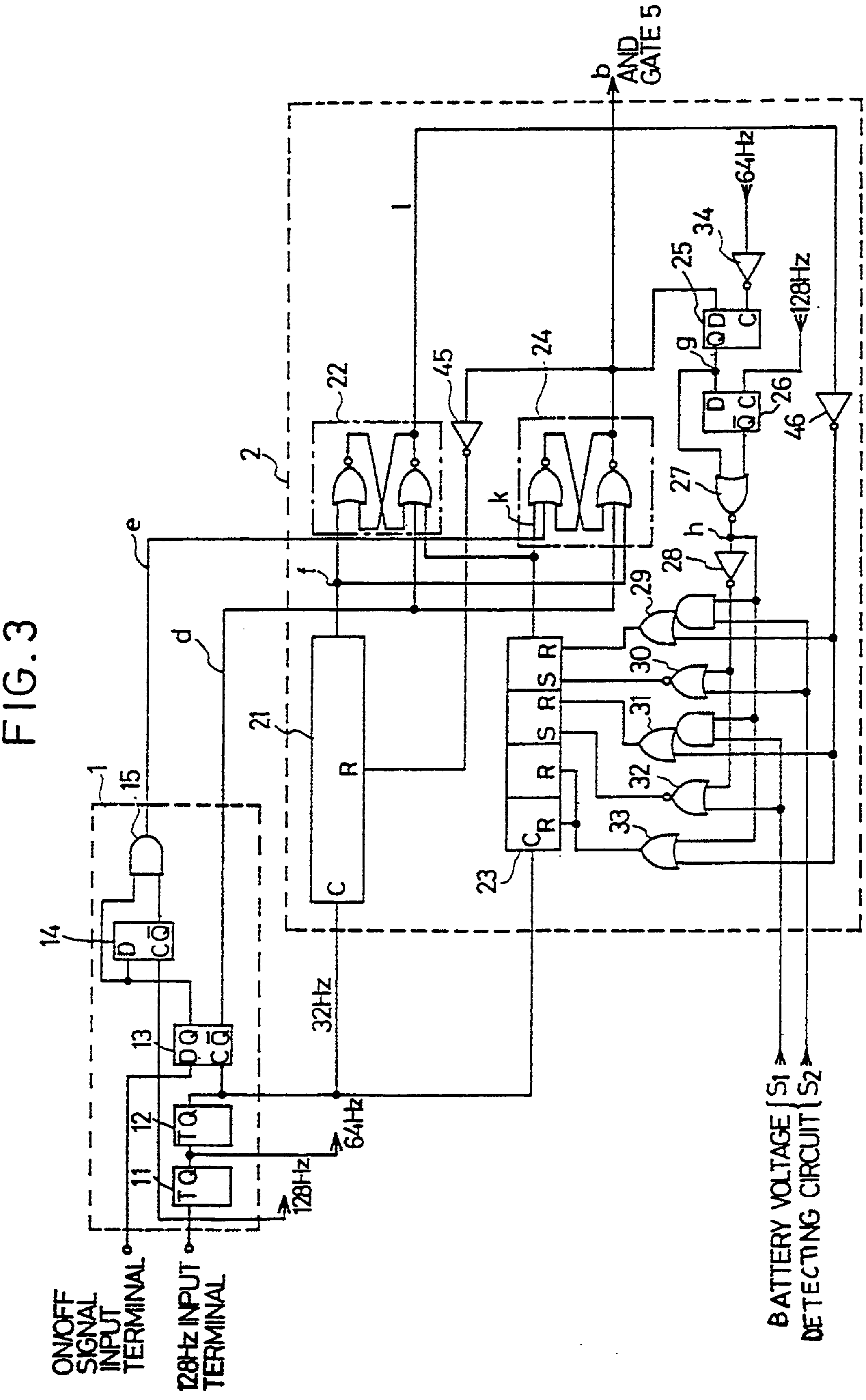
ON/OFF SIGNAL INPUT TERMINAL
128Hz INPUT TERMINAL
128Hz
64Hz
32Hz
BATTERY VOLTAGE DETECTING CIRCUIT
S1
S2
b
AND GATE 5
64Hz
128Hz
1
2
11
12
13
14
15
21
22
23
24
25
26
27
28
29
30
31
32
33
34
45
46
d
e
f
g
h
k
l

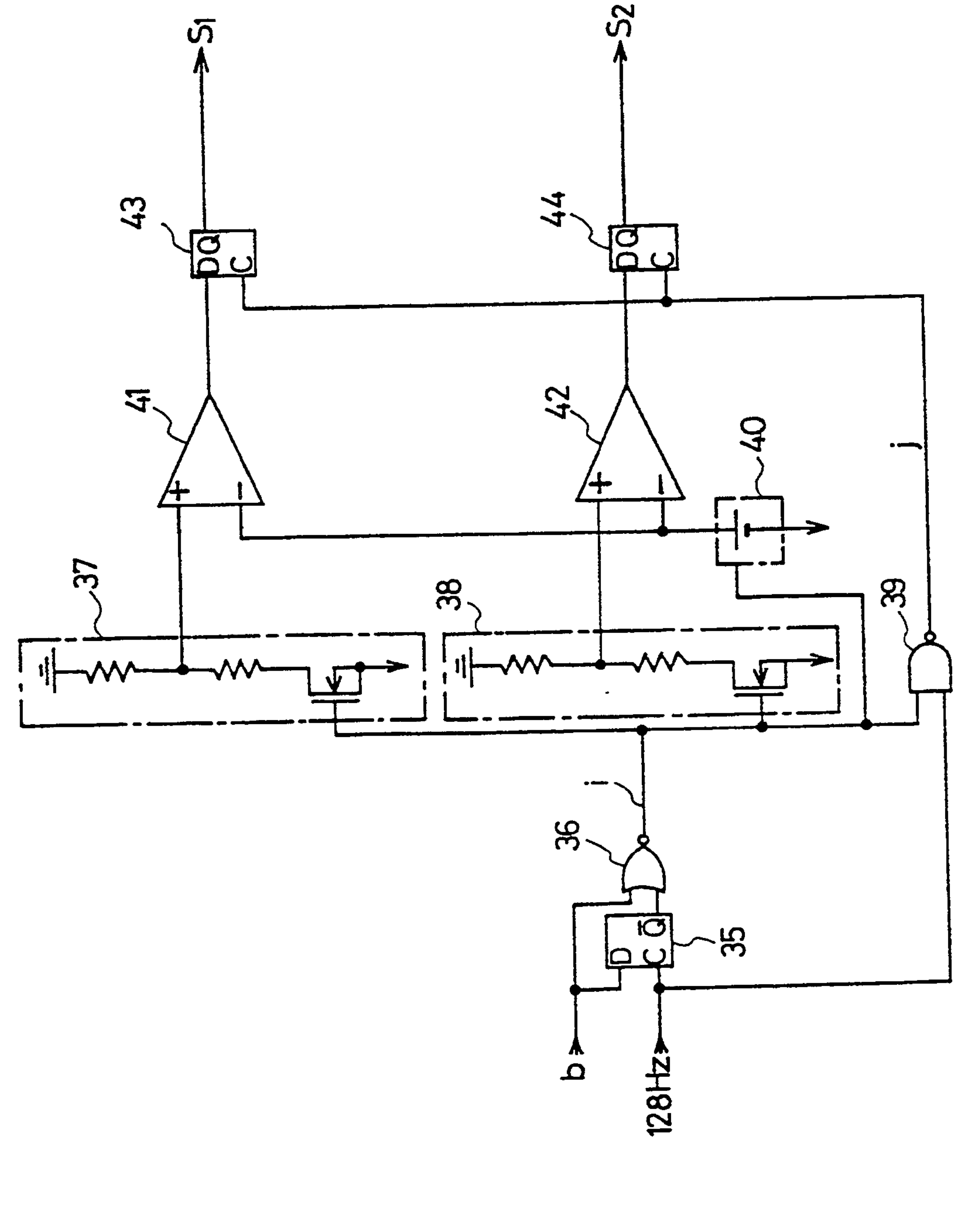


FIG. 4

FIG. 5

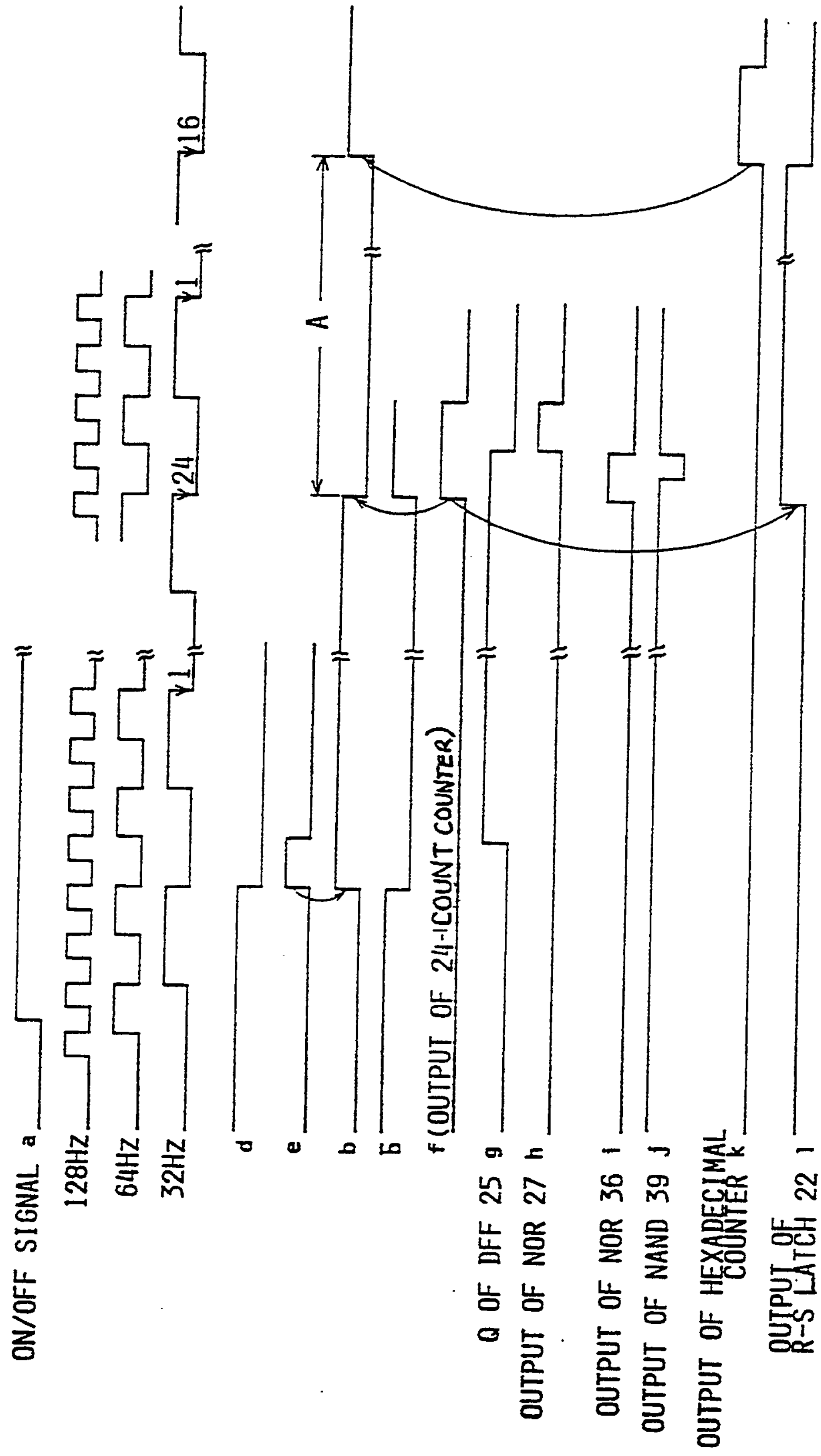
ON/OFF SIGNAL a
128Hz
64Hz
32Hz
d
e
b
b̄
f (OUTPUT OF 24-COUNT COUNTER)
Q OF DFF 25 g
OUTPUT OF NOR 27 h
OUTPUT OF NOR 36 i
OUTPUT OF NAND 39 j
OUTPUT OF HEXADECIMAL COUNTER k
OUTPUT OF R-S LATCH 22 l
1
24
1
16
A

European Patent Office

# EUROPEAN SEARCH REPORT

Application Number

EP 90 31 3307

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 11, no. 17 (E-471)(2464) 17 January 1987, & JP-A-61 189175 (CANON INC.) 22 August 1986, * the whole document * ----- | | H01L41/04 |
| | | | TECHNICAL FIELDS SEARCHED (Int. Cl.5 ) |
| | | | H01L |

The present search report has been drawn up for all claims

| Place of search | Date of completion of the search | Examiner |
|---|---|---|
| THE HAGUE | 04 MARCH 1991 | PELSERS L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)